Europäisches Patentamt

European Patent Office

Office européen des brevets

(19)

(11) Veröffentlichungsnummer : **0 225 395**
**B1**

(12) **EUROPÄISCHE PATENTSCHRIFT**

(45) Veröffentlichungstag der Patentschrift :
**09.11.88**

(51) Int. Cl.⁴ : **G 09 B 21/02, B 41 J 3/32**

(21) Anmeldenummer : **85115789.1**

(22) Anmeldetag : **11.12.85**

(54) **Vorrichtung zum Darstellen von grafischer Information.**

(43) Veröffentlichungstag der Anmeldung :
**16.06.87 Patentblatt 87/25**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**DE-A- 2 364 342**
**DE-A- 2 754 224**
**US-A- 4 266 936**

(73) Patentinhaber : **Deutsche Blindenstudienanstalt e.V.**
**Am Schlag 8**
**D-3550 Marburg/Lahn (DE)**

(72) Erfinder : **Hoffarth, Rainer**
**Bellnhäuser Mühle 1**
**D-3555 Fronhausen (DE)**

(74) Vertreter : **Olbricht, Karl Heinrich, Dipl.-Phys.**
**Am Weinberg 15**
**D-3556 Niederweimar (DE)**

**Beschreibung**

Die Erfindung betrifft eine Vorrichtung gemäß dem Oberbegriff von Anspruch 1.

Zum tast- und sichtbaren Darstellen von grafischer Information, insbesondere von Blindenschrift-Texten, gibt es Geräte verschiedener Art. So beschreibt die US-PS 3 622 759 eine Vorrichtung mit einer perforierten Endlosbahn, die dazu dient, informationsgemäß gesetzte eckige oder runde Pillen zwischen eine Anordnung von Hubstößeln und vertikal beweglichen Klötzchen zu bringen. Diese werden von den Pillen gehoben, die hierbei als bewegungsübertragende Zwischenglieder dienen. Mittels Sensoren können die angehobenen Klötzchen abgetastet werden. Die recht komplizierte Apparatur muß in mehreren Arbeitsschritten bedient werden. Entsprechend zeitraubend und störungsanfällig ist der Setzvorgang. Die Information bleibt auf dem Gerät, zu dessen Aufstellungsort der blinde Leser gehen muß, um den Textinhalt kennenzulernen.

Andere, kleinere Vorrichtungen ermöglichen es, jeweils eine Zeile zu setzen, die dann zum Lesen abgetastet wird. Beispielsweise ist nach der DE-OS 30 35 078 eine Lochtrommel vorgesehen, durch die elektromagnetisch von innen nach außen bewegte Stifte mit ihren Köpfen oder Kuppen je eine Zeile in einer Lesefläche bilden. Die verhältnismäßig teuren Geräte sind kaum oder nicht zum fortlaufenden Lesen geeignet, wie es die Sehenden fast ausschließlich kennen.

Es besteht mithin Bedarf an solchen Lesemöglichkeiten für Blinde, die nicht in Zeitungs- oder Buchform vorliegen. Bislang erreichen den Blinden Kurztexte wie Nachrichten, Inhaltsangaben usw. im allgemeinen nur als Hörinformation.

Ziel der Erfindung ist es, auch Lesestoff für Blinde vermittelbar zu machen, der weder maschinengeschrieben noch an Papierträger gebunden ist. Insbesondere sollen an sich flüchtige, nicht zur Vervielfältigung vorgesehene grafische Informationen bzw. Texte mit einfachen und erschwinglichen Hilfsmitteln lesbar gemacht werden.

Zur Lösung dieser Aufgabe sieht die Erfindung bei einer Vorrichtung der eingangs genannten Art die im kennzeichnenden Teil von Anspruch 1 angegebenen Maßnahmen vor. Ausgestaltungen sind Gegenstand der Unteransprüche 2 bis 24.

Ein Hauptmerkmal der Erfindung sieht einen entnehmbaren Zeichenträger vor, der die zeichenbildenden Stifte sowie die Rasteinrichtung hierfür haltert. In der Vorrichtung läßt sich also ein Text setzen, der auf dem Zeichenträger bleibt, bis eine Löscheinrichtung betätigt wird. Je nach Bedarf kann der Zeichenträger am Aufstellungsort der Vorrichtung benutzt werden, nämlich an oder in der Deckplatte oberhalb der Setzeinrichtung, oder man kann ihn gemäß Anspruch 2 als unabhängiges Display mobil verwenden. Dazu ist der Zeichenträger vorteilhaft als Lese- oder Druckplatte, -leiste o. dgl. ausgebildet ; er kann beispielsweise in Form einer Anschlagtafel an einer bestimmten Stelle austauschbar angeordnet sein, so daß ältere Mitteilungen durch neue ersetzt und dann gelöscht werden können, um das Display für weitere Aufgaben freizusetzen. Die praktische Verwendbarkeit geht mithin weit über die Möglichkeiten hinaus, auf welche die herkömmliche Lesestifte aufweisenden Vorrichtungen z. B. nach den US-PS 4 108 066 und 4 266 936 begrenzt sind.

Nach der Weiterbildung gemäß Anspruch 3 sind im Zeichenträger die Rast- und die Löscheinrichtung für die Stifte baulich vereinigt.

Dadurch ist es möglich, den gesetzten Text unabhängig vom Grundgerät bedarfsweise zu löschen, z. B. wenn eine bisherige Information überholt ist, eine neue aber nicht zur Verfügung steht bzw. der Zeichenträger bewußt blank gelassen werden soll.

Ein sehr zweckmäßiger Aufbau ergibt sich aus den Ansprüchen 4 und 5. Danach ist der Zeichenträger aus einer Anzahl gleichartiger Profile zusammengesetzt, in oder zwischen denen zumindest je eine Reihe von Stiften geführt ist, die jeweils in ihrem Schacht von einer Feder, einem Gummiband o. dgl. zur Ausgangsposition hin belastet sein können. Diese Anordnung ermöglicht es, die Größe des Zeichenträgers zu variieren, ohne daß die Grundkonstruktion verändert werden müßte. Vorzugsweise verlaufen die Profile quer zu der Außenfläche. Jedes einzelne Profil kann sehr schmal und leicht ausgebildet sein. Infolgedessen lassen sich in einem Display beispielsweise Zeichenfelder der folgenden Punktanzahlen unterbringen, wobei aber auch ganz andere Zahlen und Zahlenverhältnisse möglich sind :

$$70 \times 100 = 7.000$$
$$100 \times 120 = 12.000$$
$$120 \times 180 = 21.600$$
$$120 \times 240 = 28.800$$
$$180 \times 240 = 43.200$$
$$200 \times 300 = 60.000.$$

Sehr günstig ist es, wenn die Rast- und Löscheinrichtung gemäß Anspruch 6 eine Anzahl von Streifen aufweist, die jeweils an einer Reihe von Stiften anliegend geführt und insbesondere entlang den Profilen quer zur Außenfläche des Zeichenträgers verschiebbar sind. Dies kann gemeinsam oder einzeln dadurch geschehen, daß die Streifen laut Anspruch 7 mittels einer sie quer durchsetzenden Achse bewegt werden, die über zugeordnete Mitnehmer mit einem Rahmen und einer Kurbel oder einem Getriebemotor antriebsverbunden ist. Diese einfach und genau herzustellenden Streifen, für jede Stiftreihe also ein einziges Bauelement, ersetzen eine Vielzahl herkömmlich notwendiger Rast- und Löschkomponenten. Besonders vorteilhaft ist ihre Ausbildung gemäß Anspruch 8, wonach jeder Streifen aus elastischem Material wie Federstahl, Kunststoff o. dgl. besteht und eine Reihe von Zähnen aufweist, die in spitzem Winkel von der Ebene des Streifens abstehen. Jeder Stift hat unterhalb seiner Kuppe wenigstens eine Hinterschneidung, an welcher der benachbarte Zahn in entsprechender Stellung des Streifens einen Rastabsatz findet. Es genügt also, jeden zu setzenden Stift entgegen der ihn belastenden Feder so weit anzuheben, bis der benachbarte Zahn an dem Rastabsatz des Stiftes einfällt. Die Löschung erfolgt dadurch, daß die Zähne parallel zur Zeichenträger-Außenfläche quer zur Stiftachse wegbewegt werden ; infolgedessen entfällt die Rast und die Stifte gleiten in ihre Ausgangslage zurück.

Die Rast wird erleichtert, wenn die Zähne gemäß Anspruch 9 an ihrer Oberkante und/oder in ihrer Fläche gewölbt sind, namentlich konvex in bezug auf die Streifenebene. Diese Gestaltung hat den weiteren Vorteil, daß man einfache zylindrische Stifte benutzen kann, die lediglich eine Raststufe und eine Abstützung für die Belastungsfeder zu haben brauchen.

Für die Verwendung ist es ferner vorteilhaft, wenn die Zähne gemäß Anspruch 10 im gleichen Rasterabstand wie die Stifte angeordnet und die Streifen gegenüber den Stiftreihen jeweils um halben Rasterabstand seitlich verschiebbar sind. Infolgedessen lassen sich gleichmäßige Muster setzen und sehr bequem löschen.

Eine quadratische Anordnung des Zeichenfeldes auf dem Träger ergibt sich, wenn laut Anspruch 11 die Profile im gleichen Rasterabstand wie die Reihen der Stifte angeordnet sind.

Konstruktiv sehr günstig ist die formschlüssige Aufreihbarkeit der Profile nach Anspruch 12 quer zur Richtung der Stiftreihen so, daß die Oberseite der Profile die von den Schachtmündungen perforierte Außenfläche bildet. Auch kann jedes Profil gemäß Anspruch 13 zur Aufnahme des zugeordneten Streifens und/oder der Stifte Führungsflächen, Schlitze o. dgl. haben, die sich z. B. halbschalenartig um das zu führende Element herum schließen. Montage und Service werden dadurch stark erleichtert.

Gemäß Anspruch 14 kann die Setzeinrichtung motorisch oder von Hand schrittweise jeweils um Rasterabstand bewegbar sein, insbesondere seitlich und/oder in Längsrichtung der Profile. Damit läßt sich der Setzvorgang außerordentlich beschleunigen. Die jeweilige Stellung der Setzeinrichtung kann laut Anspruch 15 durch eine beispielsweise taktile Anzeige für jeden Schritt wahrnehmbar gemacht werden. Sowohl sehende Benutzer als auch Blinde können dadurch die jeweilige Position der Setzeinrichtung ohne weiteres erfassen.

Gemäß einer wichtigen Weiterbildung nach Anspruch 16 weist die Setzeinrichtung eine Anzahl von Hebeln mit Spitzen auf, die jeweils an das untere Ende der Stifte andrückbar sind, so daß sich die Stifte durch einfach Betätigung der Hebel in gewünschter Weise anheben lassen. Dazu kann die Setzeinrichtung nach Anspruch 17 zumindest einen längs und quer zu den Profilen verfahrbaren Hubauslöser aufweisen, bevorzugt einen gemäß einer Koordinaten-Matrix steuerbaren Elektromagneten. Alternativ sieht Anspruch 18 eine Gruppe von zueinander versetzt angeordneten Hubauslösern vor, namentlich von Elektromagneten, Pneumatikzylindern o. dgl., die direkt oder über Zwischenglieder auf die Stifte wirken. Vorzugsweise greift jeder Hubauslöser laut Anspruch 19 an einem Hebel an, und die Hebelspitzen fluchten bei betätigten Hubauslösern in einer Linie quer zur Richtung der Stiftreihen. Mit einer solchen Anordnung setzt man die Stifte reihenweise, worauf die Setzeinrichtung jeweils um einen Rasterschritt weiterbewegt wird. Platzsparend sind die Hebel gemäß Anspruch 20 abwechselnd an Achsen gelagert, die einander außerhalb der Hubauslösergruppe gegenüberliegen. Zweckmäßig ist jeder Hebel nach Anspruch 21 durch eine Feder zur Anlage an dem Stellglied des zugeordneten Hubauslösers belastet.

Vor allem als Druckplatte bzw. Tiefziehstempel eignet sich ein Display nach Anspruch 22, bei dem der Zeichenträger aus etagenartig angeordneten Lochplatten besteht, welche die Stifte senkrecht zu ihrer Ebene führen. Dieser Aufbau ist ebenso leicht wie stabil.

Die Gestaltung laut Anspruch 23 sieht vor, daß zumindest zwei Zeichenträger übereinander angeordnet gleichzeitig setzbar sind, wobei die Länge der Stifte so bemessen ist, daß die unteren Stifte an den oberen zur Anlage kommen, also während des Setzvorganges auch als Zwischenglieder dienen. Man wird für eine solche Anordnung die Hubauslöser stärker bemessen.

Noch eine andere Weiterbildung der Erfindung besteht laut Anspruch 24 darin, daß der bzw. jeder Zeichenträger rückseitig schreibtafelartig ausgebildet und beschriftbar ist. Die Verwendungsmöglichkeiten werden dadurch noch gesteigert.

Weitere Merkmale, Einzelheiten und Vorteile der Erfindung ergeben sich aus der folgenden Beschreibung von Ausführungsbeispielen anhand der Zeichnung. Darin zeigen :

Fig. 1 eine Schrägansicht einer handbetätigbaren Ausführungsform einer erfindungsgemäßen Vorrichtung.

Fig. 2 eine stark vergrößerte Teil-Seitenansicht eines Zeichenträgers,

Fig. 3a eine schematisierte Vorderansicht eines Zeichenträger-Profils,

Fig. 3b eine Schnittansicht entsprechend der Linie IIIb-IIb in Fig. 3a.

Fig. 3c eine Draufsicht auf das Profil von Fig. 3a,

Fig. 4 eine schematisierte Schrägansicht, teilweise im Schnitt, eines Zeichenträger-Profils,

Fig. 5 eine schematisierte Schrägansicht von Teilen einer Rast- und Löscheinrichtung,

Fig. 6 eine stark vergrößerte Schrägansicht eines Rastelements,

Fig. 7 eine Seitenansicht, teilweise im Schnitt, einer Stiftverrastung,

Fig. 8 eine schematisierte Draufsicht auf die Anordnung von Fig. 7,

Fig. 9 eine schematisierte Seitenansicht einer Stiftverrastung.

Fig. 10 eine schematisierte Draufsicht auf eine Setzeinrichtung und

Fig. 11 eine Seitenansicht der geöffneten Einrichtung von Fig. 10.

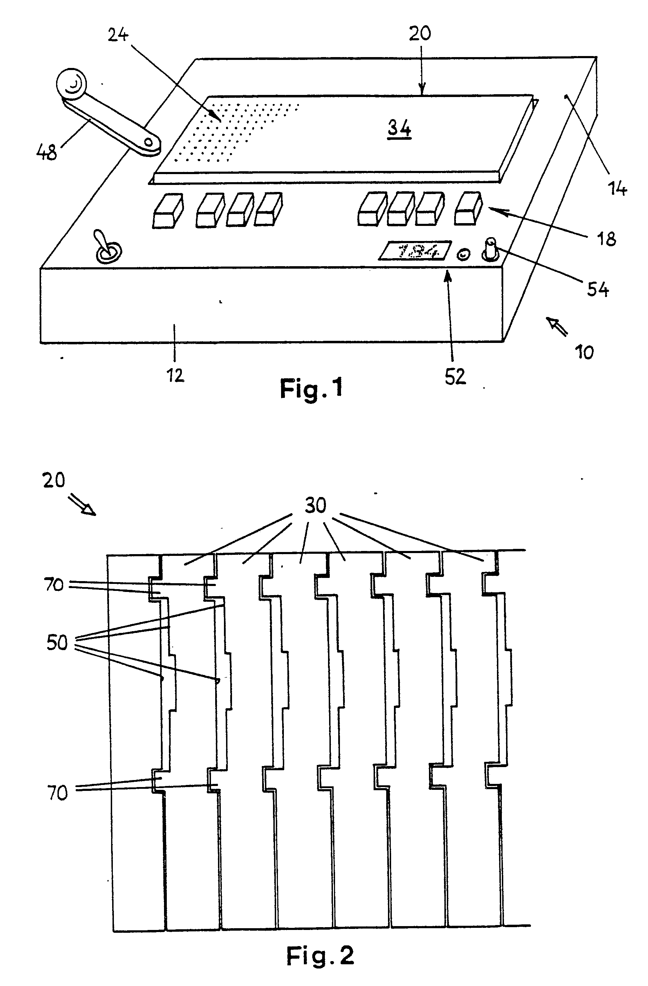

Die in Fig. 1 dargestellte Ausführungsform der Vorrichtung 10 hat ein Gehäuse 12 mit einer Deckplatte 14. Darunter befindet sich eine Setzeinrichtung, die mittels Wähltasten 18 betätigbar ist, um auf einem Zeichenträger 20 einen gewünschten Text zu setzen.

Dies geschieht mittels Stiften, deren Kuppen 24 die Außenfläche 34 des Zeichenträgers 20 geringfügig überragen. Im Zeichenträger 20 befindet sich eine Rasteinrichtung für die Stifte. Ferner ist darin eine Löscheinrichtung vorhanden, um gesetzte Stifte in ihre Ausgangsposition zurückzubringen. Die Löscheinrichtung ist mittels einer Kurbel 48 betätigbar. Die jeweilige Stellung der Setzeinrichtung ist an einer optischen Anzeige 52 und an einer Tastanzeige 54 erkennbar. Links im Bild ist schematisch ein Betriebsschalter für die elektrischen Einrichtungen der Vorrichtung 10 angedeutet.

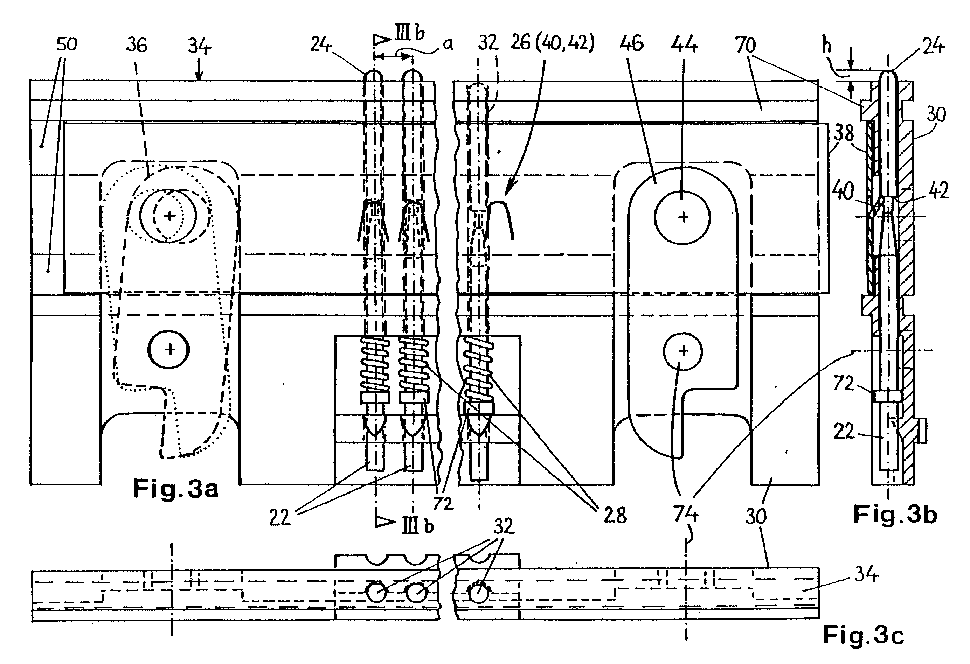

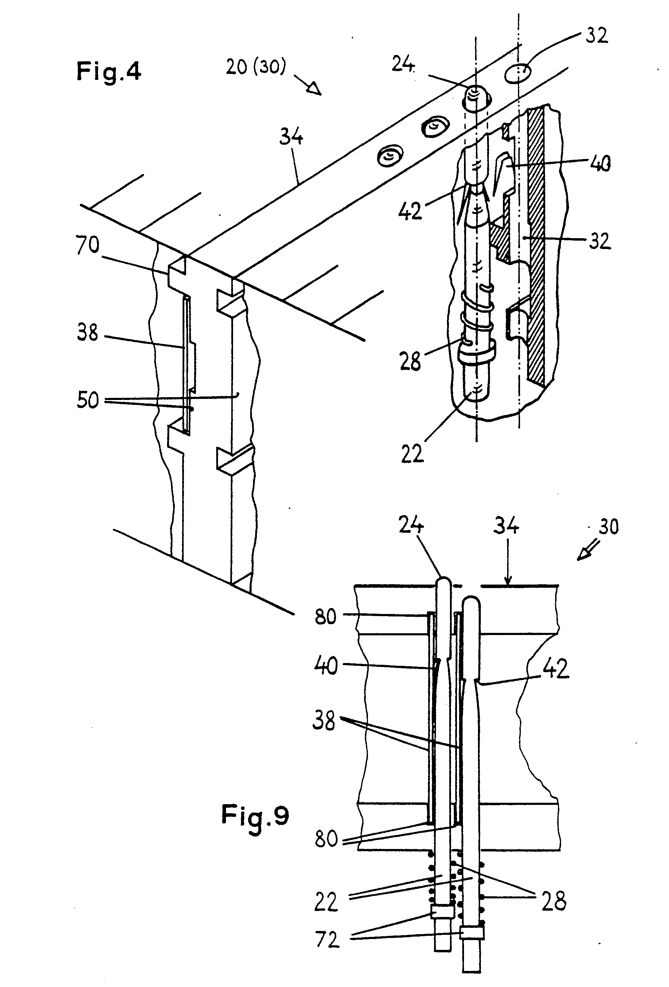

Stark vergrößert zeigt Fig. 2 die Grundkonstruktion des Zeichenträgers 20. Er ist aus einzelnen Profilen 30 zusammengesetzt, die mit Leisten 70 formschlüssig ineinandergreifen. Zwischen benachbarten Profilen 30 sind im oberen Teil Zwischenräume vorgesehen, die Führungsflächen 50 für elastische Streifen 38 (Fig. 3 bis 5) aufweisen. Außerdem sind, wie insbesondere aus Fig. 3a bis 3c und Fig. 4 erkennbar ist, die Profile 30 erfindungsgemäß im Inneren mit Halbschalen versehen, welche Schächte 32 zur Führung der Stifte 22 bilden.

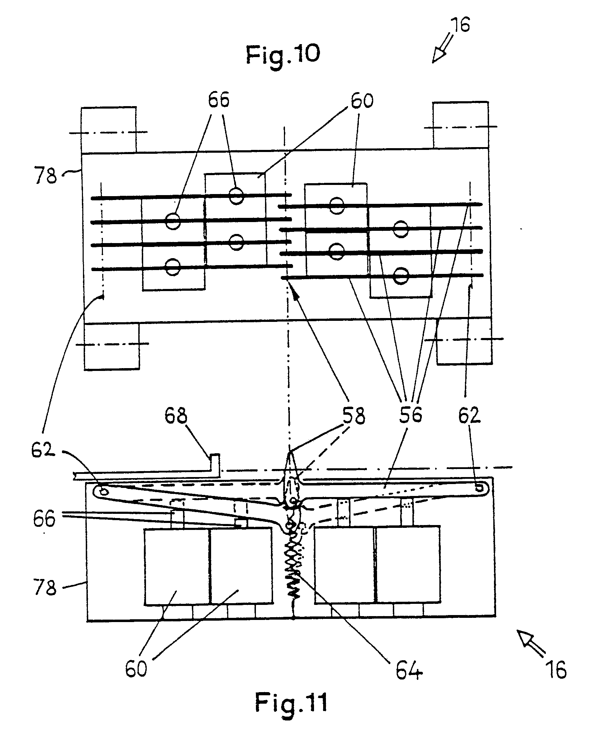

Im einzelnen ist diese Anordnung aus Fig. 3a in Verbindung mit Fig. 3b und 3c ersichtlich. Dabei ist in der rechten Hälfte von Fig. 3a die Ruhestellung der Stifte 22 nach Betätigung der Löscheinrichtung 26, in der linken Hälfte hingegen die Arbeitsstellung gesetzter Stifte 22 gezeigt. Letztere geht auch aus der Schrägansicht in Fig. 4 hervor. Aus der Draufsicht in Fig. 3c (ohne Stifte) ist zu erkennen, daß die Führungsschächte 32 für die Stifte an der Außenfläche 34 der Profile 30 münden. Jeder einzelne Stift 22 ist von einer Feder 28 zur Ruhestellung hin belastet. Wird er jedoch mittels der Setzeinrichtung 16 (Fig. 10 und 11) angehoben, so bewirkt die Rasteinrichtung 26, daß der gehobene Stift 22, die Außenfläche 34 um die Tasthöhe h überragend, festgehalten ist. Mit der Rasteinrichtung 26 ist eine Löscheinrichtung 36 baulich vereinigt, nämlich in Form von Streifen 38, die mit Zähnen 40 versehen sind, welche aus der Streifenebene in spitzem Winkel abstehen (vergl. Fig. 3b und Fig. 4 bis 7). Die Streifen 38 sind entlang der Führungsflächen 50 zwischen den Profilen 30 verschiebbar. Ihre Stellung bestimmt, ob die Stifte 22 verrastet oder freigegeben werden. Sowohl die Stifte 22 als auch die Zähne 40 sind in einheitlichem Rasterabstand a angeordnet. Jeder Stift 22 hat einen Rastabsatz 42 in Form einer Hinterschneidung, an welcher der zugeordnete Zahn 40 eines Streifens 38 einfallen kann, wenn der Stift 22 mittels der Setzeinrichtung angehoben wird. Durch Verschiebung des Streifens 38 um halben Rasterabstand a/2 wird die Raststufe 42 freigegeben, so daß die Federn 28 die Stifte 22 der dem Streifen 38 zugeordneten Stiftreihe in Löschrichtung L in die Ruhestellung zurückbringen. Die Kuppen 24 sind dann unterhalb der Außenfläche 34 und nicht mehr tastbar.

Die seitliche Versetzung der Streifen 38 erfolgt mittels der Löscheinrichtung 36. Diese weist Mitnehmer 46 auf, die auf einer unteren, ortsfesten Achse 74 gelagert und mittels einer oberen Achse 44 in begrenztem Bereich schwenkbar sind (Fig. 3a). Diese obere Achse 44 durchsetzt auch die Streifen 38, so daß diese gleichzeitig seitlich versetzt werden. Die Betätigung der Achse 44 erfolgt beispielsweise mittels der Kurbel 48 (Fig. 1), etwa über einen (nicht dargestellten) Exzentertrieb. Auch eine Drucktasten-Betätigung einer Fortschaltung, beispielsweise eines Schaltrades mit Federraste oder einem anderen Rastgesperre, ist möglich.

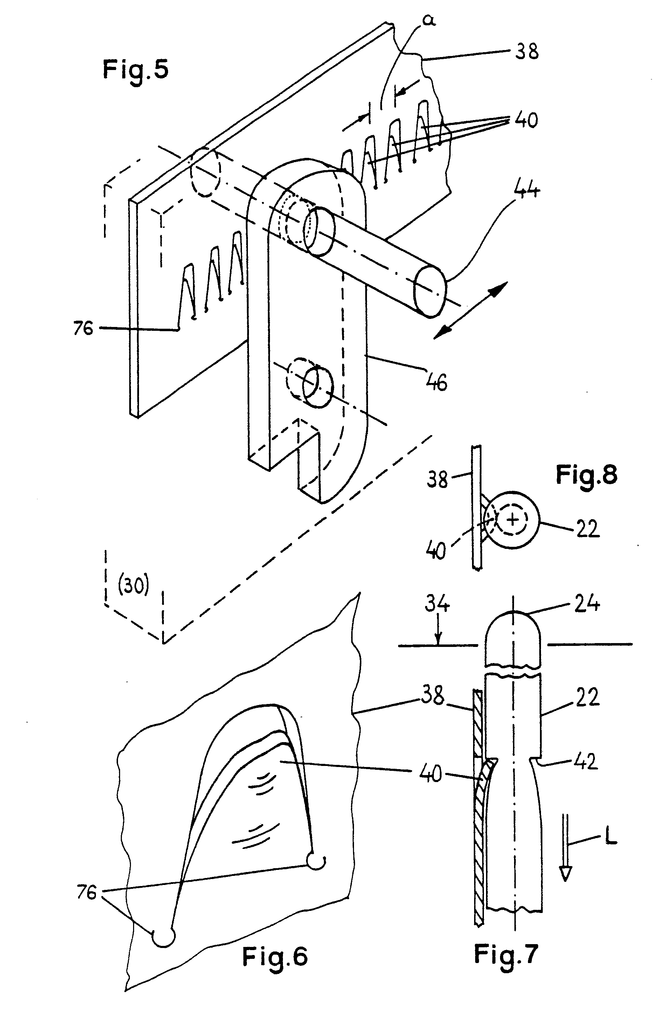

In Fig. 6 bis 8 ist die eigentliche Rasteinrichtung 26 stark vergrößert veranschaulicht. Man erkennt, daß die Zähne 40 aus dem Streifen 38 gewölbt abgekantet sein können, was einerseits ein sicheres Einrasten ermöglicht (Fig. 7 und 8), andererseits bei Betätigung der Setz- und Löscheinrichtungen 26/36 verringerte Reibung bewirkt. Die Zähne 40 liegen nämlich nur mit ihrem konvex gewölbten Spitzenteil punktförmig an dem benachbarten Körper an, d. h. an der zugehörigen Führungsfläche 50 des betreffenden Profils 30 bzw. — beim Setzen — an nur einer Umfangsstelle des zugeordneten Stiftes 22. Bevorzugt bestehen die elastischen Streifen 38 aus Federstahl, und es ist zweckmäßig, an den unteren Enden der Ausstanzungen, welche die Zähne 40 bilden, zur Herabsetzung der Biegespannungen an sich bekannte Auslauf-Enden 76 vorzusehen.

Fig. 9 zeigt eine abgewandelte Ausführungsform, bei welcher die Stifte 22 besonders dicht nebeneinander angeordnet sein können, was zu einem sehr kompakten Aufbau beiträgt. Die Streifen 38 sind hierbei in Schlitzen 80 und in direkter Anlage an den Stiften 22 geführt. Wie schon bei den vorher beschriebenen Ausführungsbeispielen, haben die Stifte 22 nahe dem unteren Ende jeweils einen Stützring oder Bund 72, an dem sich die Druckfeder 28 abstützt. Nicht gezeichnet ist eine weitere Variante, wobei die einzelnen Federn 28 durch ein Gummiband ersetzt sind, das entlang des Profils 30 darin geführt ist und alle Stifte 22 einer Reihe zur Ruhestellung hin belastet.

Ein Ausführungsbeispiel der Setzeinrichtung 16 ist in Fig. 10 und 11 dargestellt. In einem Rahmen oder Gehäuse 78 sind Hubauslöser 60 in Form von Elektromagneten in gestaffelter Anordnung gehalten. Im Oberteil des Rahmens bzw. Gehäuses 78 sind ferner Achsen 62 angebracht, an denen Hebel 56 schwenkbar gelagert sind. Die Hebel 56 können Flachteile mit Spitzen 58 sein, die in der Mitte der Setzeinrichtung 16 zumindest in angehobener Stellung fluchten. Zugfedern 64 ziehen die Hebel 56 normalerweise nach unten.

Wird der zugeordnete Hubauslöser bzw. Elektromagnet 60 betätigt, so drückt dessen Stellglied oder Magnetanker 66 den betreffenden Hebel 56 nach oben. Seine Spitze 58, in Anlage am unteren Ende eines Stiftes 22 der betreffenden Reihe im Zeichenträger 20, hebt den Stift dann an, so daß er wie beschrieben in gesetzter Position einrastet und die Außenfläche 34 des Zeichenträgers überragt. Je nach Stellweg des Elektromagneten 60 kann der Hub der Spitzen 58 nach Bedarf eingestellt werden. Die Tasthöhe h, welche durch die Lage der Raststufe 42 am Stift 22 bestimmt ist, liegt im Bereich von 0...2 mm.

Fig. 11 zeigt noch einen Schieber 68 oberhalb des Gehäuses 78, mit dem die Mitnehmer 46 (Fig. 3a und 5) zur Betätigung der Löscheinrichtung 36 bewegbar sind.

Der Deutlichkeit halber sind in den Zeichnungen einzelne Elemente und Anordnungen isoliert oder herausgehoben dargestellt, doch ist anzumerken und dem Fachmann ohne weiteres verständlich, daß die betreffenden Elemente und Anordnungen an der Vorrichtung 10 je nach deren Bemessung vielfach verwendet sind.

In den Rahmen der Erfindung fallen auch Abwandlungen und Kombinationen, die von den beschriebenen Ausführungsbeispielen abweichen. So können die Zähne 40, wie in Fig. 3b schematisch angedeutet, als ebene oder teilweise geknickte Abkantungen von den Streifen 38 abstehen. Die hierbei zum Zahnende führende Knickkante bildet eine Aussteifung nach Art einer Sicke, wodurch der Federzahn auch höhere Belastungen wie z. B. beim Druckvorgang sicher abfängt. Wichtig ist ferner, daß Displays, die vor allem auch als Druckplatte oder Tiefziehstempel verwendet werden sollen, auf Lücke zwischen den sonst ohnehin vorhandenen Reihen jeweils zumindest eine weitere Stiftreihe aufnehmen. Damit ist der sog. Zwischenpunktdruck möglich, mit dem die Rückseite eines Blattes beschriftbar ist, dessen Vorderseite eine separat tastbare Information trägt.

Legende PA 469 EP

a Rasterabstand
h Tasthöhe
L Löschrichtung

10 Vorrichtung
12 Gehäuse
14 Deckplatte
16 Setzeinrichtung
18 Wähltasten
20 Zeichenträger
22 Stifte
24 Kuppen
26 Rasteinrichtung
28 (Druck-) Federn
30 Profile
32 Schächte
34 Außenfläche
36 Löscheinrichtung
38 Streifen

40 Zähne
42 Rastabsatz/Hinterschneidung
44 Achse
46 Mitnehmer
48 Kurbel
50 Führungsflächen
52 (optische) Anzeige
54 Tastanzeige
56 Hebel
58 Spitzen
60 Hubauslöser/Magnete
62 Achsen
64 (Zug-) Federn
66 Stellglied/Magnetanker
68 Schieber
70 Leisten
72 Stützring/Bund
74 untere Achse
76 Auslauf-Enden
78 Rahmen/Gehäuse
80 Schlitze

**Patentansprüche**

1. Vorrichtung (10) zum tast- und sichtbaren Darstellen von grafischer Information, insbesondere von Blindenschrift-Texten, mit einem Gehäuse (12), einer Deckplatte (14) und einer mechanischen Setzeinrichtung (16) für eine Anzahl von oben gekuppten, federbelasteten Stiften (22), denen jeweils elektrisch betätigbare Hubauslöser (60) zugeordnet sind, sowie mit einer Löscheinrichtung (36), womit gesetzte Stifte, deren Kuppen (24) eine Außenfläche (34) überragen, in ihre Ausgangsposition rückstellbar sind, dadurch gekennzeichnet, daß an oder in der Deckplatte (14) oberhalb der Setzeinrichtung (16) wenigstens ein Zeichenträger (20) entnehmbar angeordnet ist, der die Stifte (22) samt einer Rasteinrichtung (26) haltert.

2. Vorrichtung nach Anspruch 1, dadurch gekennzeichnet, daß der bzw. jeder Zeichenträger (20) als unabhängig verwendbares Display in Form einer Lese- oder Druckplatte bzw. -leiste, als Tiefziehstempel o. dgl. ausgebildet ist.

3. Vorrichtung nach Anspruch 1 oder 2, dadurch gekennzeichnet, daß im Zeichenträger (20) die Rast- und die Löscheinrichtung (26, 36) für die Stifte (22) baulich vereinigt sind.

4. Vorrichtung nach einem der Ansprüche 1 bis 3, dadurch gekennzeichnet, daß der Zeichenträger (20) aus einer Anzahl gleichartiger Profile (30) zusammengesetzt ist, in oder zwischen denen sich jeweils zumindest eine Reihe von Schächten (32) befindet, welche die Stifte (22) führen.

5. Vorrichtung nach Anspruch 4, dadurch gekennzeichnet, daß jeder Stift (22) in seinem Schacht (32) von einer Feder (28), einem Gummiband o. dgl. zur Ausgangsposition hin belastet ist.

6. Vorrichtung nach einem der Ansprüche 3 bis 5, dadurch gekennzeichnet, daß die Rast- und Löscheinrichtung (26, 36) eine Anzahl von jeweils an einer Reihe von Stiften (22) anliegend geführten, insbesondere entlang den Profilen (30) quer zu der Außenfläche (34) des Zeichenträgers (20) verschiebbaren Streifen (38) aufweist.

7. Vorrichtung nach Anspruch 6, dadurch gekennzeichnet, daß die Streifen (38) mittels einer sie quer durchsetzenden Achse (44), die über zugeordnete Mitnehmer (46) mit einem Rahmen und einer Kurbel (48) oder einem Getriebemotor antriebsverbunden ist, gemeinsam oder einzeln verschiebbar sind.

8. Vorrichtung nach Anspruch 6 oder 7, dadurch gekennzeichnet, daß jeder Streifen (38) aus elastischem Material wie Federstahl, Kunststoff o. dgl. besteht und eine Reihe von Zähnen (40) aufweist, die in spitzem Winkel von der Ebene des Streifens abstehen, und daß jeder Stift (22) unterhalb seiner Kuppe (24) wenigstens eine Hinterschneidung (42) hat, an welcher der benachbarte Zahn (40) einen Rastabsatz findet.

9. Vorrichtung nach Anspruch 8, dadurch gekennzeichnet, daß die Zähne (40) an ihrer Oberkante und/oder in ihrer Fläche gewölbt sind, namentlich konvex in bezug auf die Streifenebene.

10. Vorrichtung wenigstens nach Anspruch 6 und 8, dadurch gekennzeichnet, daß die Zähne (40) im gleichen Rasterabstand (a) wie die Stifte (22) angeordnet sind und daß die Streifen (38) gegenüber den Reihen von Stiften (22) um halben Rasterabstand (a/2) seitlich verschiebbar sind.

11. Vorrichtung wenigstens nach Anspruch 4 und 10, dadurch gekennzeichnet, daß die Profile (30) im gleichen Rasterabstand (a) wie die Reihen der Stifte (22) angeordnet sind.

12. Vorrichtung nach wenigstens einem der Ansprüche 4 bis 11, dadurch gekennzeichnet, daß die Profile (30) quer zur Richtung der Reihen von Stiften (22) formschlüssig so aufreihbar sind, daß die Oberseite der Profile (30) die von den Schachtmündungen perforierte Außenfläche (34) bildet.

13. Vorrichtung nach wenigstens einem der Ansprüche 4 bis 12, dadurch gekennzeichnet, daß jedes Profil (30) zur Aufnahme des zugeordneten Streifens (38) und/oder der Stifte (22) Führungsflächen (50), Schlitze o. dgl. hat oder Halbschalen bildet.

14. Vorrichtung nach wenigstens einem der Ansprüche 1 bis 13, dadurch gekennzeichnet, daß die Setzeinrichtung (16) motorisch oder von Hand schrittweise jeweils um Rasterabstand (a) bewegbar ist, insbesondere seitlich und/oder in Längsrichtung der Profile (30).

15. Vorrichtung nach wenigstens einem der Ansprüche 1 bis 14, dadurch gekennzeichnet, daß wenigstens eine Anzeigeeinrichtung (52) für die jeweilige Stellung der Setzeinrichtung (16) vorhanden ist, insbesondere derart, daß bei jedem Schritt der Setzeinrichtungs-Bewegung eine taktile Anzeige (54) wirksam wird.

16. Vorrichtung nach wenigstens einem der Ansprüche 1 bis 15, dadurch gekennzeichnet, daß die Setzeinrichtung (16) eine Anzahl von Hebeln (56) mit Spitzen (58) aufweist, die jeweils am unteren Ende der Stifte (22) zur Anlage bringbar sind.

17. Vorrichtung nach wenigstens einem der Ansprüche 4 bis 16, dadurch gekennzeichnet, daß die Setzeinrichtung (16) mindestens einen längs und quer zu den Profilen (30) verfahrbaren Hubauslöser aufweist, vorzugsweise einen gemäß einer Koordinaten-Matrix steuerbaren Elektromagneten.

18. Vorrichtung nach wenigstens einem der Ansprüche 1 bis 16, dadurch gekennzeichnet, daß die Setzeinrichtung (16) eine Gruppe von zueinander versetzt angeordneten Hubauslösern (60) aufweist, namentlich von Elektromagneten, Pneumatikzylindern o. dgl., welche direkt oder über Zwischenglieder auf die Stifte (22) wirken.

19. Vorrichtung nach Anspruch 16 und Anspruch 17 oder 18, dadurch gekennzeichnet, daß jeder Hubauslöser (60) an einem Hebel (56) angreift und daß deren Spitzen (58) bei betätigten Hubauslösern in einer Linie quer zur Richtung der Reihen von Stiften (22) fluchten.

20. Vorrichtung nach Anspruch 16 und Anspruch 18 oder 19, dadurch gekennzeichnet, daß die Hebel (56) abwechseind an Achsen (62) gelagert sind, die einander außerhalb der Hubauslösergruppe gegenüberliegen.

21. Vorrichtung nach wenigstens einem der Ansprüche 16 bis 20, dadurch gekennzeichnet, daß jeder Hebel (56) durch eine Feder (64) zur Anlage an dem Stellglied (66) des zugeordneten Hubauslösers (60) belastet ist.

22. Vorrichtung nach wenigstens einem der Ansprüche 1 bis 21, dadurch gekennzeichnet, daß der Zeichenträger (20) aus insbesondere drei gleichartigen, in festen Abständen parallel zueinander angeordneten Lochplatten besteht, welche die Stifte (22) senkrecht zu ihrer Ebene führen.

23. Vorrichtung nach wenigstens einem der Ansprüche 1 bis 22, dadurch gekennzeichnet, daß zumindest zwei Zeichenträger (20) übereinander angeordnet gleichzeitig setzbar sind, wobei die Länge der Stifte (22) so bemessen ist, daß die unteren Stifte an den oberen zur Anlage kommen.

24. Vorrichtung nach wenigstens einem der Ansprüche 1 bis 23, dadurch gekennzeichnet, daß der bzw. jeder Zeichenträger (20) rückseitig schreibtafelartig ausgebildet und beschriftbar ist.

**Claims**

1. Device (10) for tactually and visually displaying graphic information, in particular braille texts, including a housing (12), a cover plate (14) and a mechanical pattern setter (16) for a plurality of spring-biassed pins (22) which have round tips (24) and are associated to stroke releasers (60) adapted for electrical actuation, and further including eraser means (36) for returning pins previously set so that their tips project from a top face (34) to starting positions, wherein above the pattern setter (16), there is on or in the cover plate (14) at least one detachable character carrier (20) supporting the pins (22) as well as locking means (26).

2. Device according to claim 1, wherein the or each character carrier (20) is an independently usable display designed as a reading or printing plate or strip, as a deep-drawing die or the like.

3. Device according to claim 1 or claim 2, wherein the locking means (26) and the eraser means (36) for the pins (22) are combined in a common structure of the character carrier (20).

4. Device according to any one of claims 1 to 3, wherein the character carrier (20) is composed of a plurality of like profiles (30) in or between which there is at least one row of bores (32) for guiding the pins (22).

5. Device according to claim 4, wherein each pin (22) is biassed in its bore (32) towards the starting position by means of a spring, a rubber ribbon or the like.

6. Device according to any one of claims 3 to 5, wherein the locking and eraser means (26, 36) comprise a plurality of strips (38) each of which is arranged to positively engage an adjacent pin row and to be shifted, in particular along the respective profile (30), in a direction parallel to the top face (34) of the character carrier (38).

7. Device according to claim 6, wherein by means of a shaft (44) that transversely extends through the strips (38) and is connected via associated engaging dogs (46) to a frame and a crank (48) or to a gear motor, the strips are adapted to be shifted jointly or individually.

8. Device according to claim 6 or claim 7, wherein each strip (38) is made of elastic material such as spring steel, plastics, etc. and comprises a row of elastic teeth (40) projecting from the plane of the strip at an acute angle, and wherein each pin (22) has below its tip (24) at least one undercut (42) for locking an adjacent tooth shoulderwise.

9. Device according to claim 8, wherein the teeth (40) are curved, in particular at the upper edge, especially convex relative to the plane of the strip (38).

10. Device at least according to claims 6 and 8, wherein the teeth (40) are spaced at a grid distance (a) equal to that of the pins (22) and wherein the strips (38) are adapted to be laterally shifted by half the grid distance (a/2) relative to the rows of pins (22).

11. Device at least according to claims 4 and 10, wherein the profiles (30) are arranged at the same grid distance (e. g., a) as the rows of pins (22).

12. Device according to any one of claims 4 to 11, wherein the profiles (30) are arranged in form-fit series in a direction transverse to the rows of pins (22) such that the tops of the profiles (30) jointly constitute the top face (34) which is perforated by the openings of the guiding bores.

13. Device according to at least one of claims 4 to 12, wherein each profile (30) includes guide faces (50), slots, etc. or is shell-shaped for receiving the associated strips (38) and/or the pins (22).

14. Device according to any one of claims 1 to 13, wherein means are provided for manual or power-operated step movement of the pattern setter (16) by one distance unit (e. g., a) each,

especially in a lateral direction and/or along the profiles (30).

15. Device according to any one of claims 1 to 14, wherein at least one indicator (52, 54) is provided for the respective actual position of the pattern setter (16), in particular such that with each step of the pattern setter's motion, a tactual indicator (54) is activated.

16. Device according to any one of claims 1 to 15, wherein the pattern setter (16) includes a plurality of levers (56) having points (58) adapted to positively engage the respective lower ends of the pins (22).

17. Device according to any one of claims 1 to 16, wherein the pattern setter (16) comprises at least one stroke releaser adapted for movement along and transverse to the profiles (30), preferably coordinate-controlled solenoid means (60).

18. Device according to any one of claims 1 to 16, wherein the pattern setter (16) includes a group of staggered lever actuators (66), especially of solenoids, pneumatic cylinders, etc. arranged to act on the pins (22) either directly or via intermediate members.

19. Device according to claim 16 and either claim 17 or claim 18, wherein each stroke releaser (60) is adapted to engage one lever (56) and wherein the lever points (58) when actuataed by stroke releasers are aligned in a direction transverse to that of the rows of pins (22).

20. Device according to claim 16 and either claim 18 or claim 19, wherein the levers (56) are alternately borne by shafts (62) opposing each other outside the actuator group.

21. Device according to any one of claims 16 to 20, wherein each lever (56) is biassed by a spring (64) to positively engage an armature (66) of the associated actuator (60).

22. Device according to any one of claims 1 to 21, wherein the character carrier (20) is composed especially of three like apertured plates arranged parallel to each other with constant spacings such that the pins (22) are guided therein, in a direction perpendicular to the plate plane.

23. Device according to any one of claims 1 to 22, wherein at least two character carriers (20) are stacked for simultaneous pin setting, the pin length being dimensioned such that lower pins (22) engage the upper ones.

24. Device according to any one of claims 1 to 23, wherein the rear face or back page of the or each character carrier (20) is slate-like and adapted to receive a pin pattern.

**Revendications**

1. Dispositif (10) pour la présentation palpable et visible d'informations graphiques, particulièrement de textes en braille, comportant un boîtier (12), une plaque de couverture (14) et un dispositif de composition (16) pour un certain nombre de chevilles (22) à calottes supérieures et chargées par ressort, auxquelles sont affectés des déclencheurs de course (60) à commande électrique,

ainsi qu'un dispositif d'effacement (36), permettant de remettre des chevilles positionnées, dont les calottes (24) font saillie sur une surface extérieure (34), dans leur position de départ, caractérisé en ce que à ou dans la plaque de couverture au-dessus du dispositif de composition (16) il est prévu au moins un dispositif porte-caractères (20) de façon à être amovible, qui supporte les chevilles (22) en même temps qu'un dispositif d'arrêt (26).

2. Dispositif suivant la revendication 1, caractérisé en ce que le resp. chaque dispositif porte-caractères (20) est réalisé comme affichage à emploi indépendant sous forme d'une plaque resp. d'un listel de lecture ou d'impression, comme poinçon d'emboutissage etc.

3. Dispositif suivant la revendication 1 ou 2, caractérisé en ce que à l'intérieur du dispositif porte-caractères (20) le dispositif d'arrêt et d'effacement (26, 36) pour les chevilles (22) sont réunis du point de vue de la construction.

4. Dispositif suivant une des revendications 1 à 3, caractérisé en ce que le dispositif porte-caractères (20) est composé d'un nombre de profilés identiques (30), dans ou entre lesquels se trouve au moins une rangée de puits (32) guidant les chevilles (22).

5. Dispositif suivant la revendication 4, caractérisé en ce que chaque cheville (22) est chargée dans son puits (32) par un ressort (28), un ruban en caoutchouc etc. dans le sens de la position de départ.

6. Dispositif suivant une des revendications 3 à 5, caractérisé en ce que le dispositif d'arrêt et d'effacement (26, 36) présente un nombre de bandes (38), guidées de façon adjacente à une rangée de chevilles (22), en particulier déplaçable le long des profilés (30) transversalement à la surface extérieure du dispositif porte-caractères (20).

7. Dispositif suivant la revendication 6, caractérisé en ce que les bandes (38) sont déplaçables en commun ou individuellement à l'aide d'un axe (44) passant transversalement, qui est actionné, par l'intermédiaire d'entraîneurs (46) affectés, par un châssis et une manivelle (48) ou un motoréducteur.

8. Dispositif suivant la revendication 6 ou 7, caractérisé en ce que chaque bande (38) est constituée par une matière élastique, telle que acier à ressorts, plastique etc., et présente une rangée de dents (40), en saillie à angle aigu sur le plan de la bande, et en ce que chaque cheville (22) présente au-dessous de sa calotte (24) au moins une contre-dépouille (42), où la dent voisine (40) trouve un cran d'arrêt.

9. Dispositif suivant la revendication 8, caractérisé en ce que les dents (40) sont bombées à leur bord supérieur et/ou dans leur surface, en particulier convexes par rapport au plan des bandes.

10. Dispositif suivant au moins les revendications 6 et 8, caractérisé en ce que les dents (40) sont disposées à la même distance de trame (a) que les chevilles (22) et en ce que les bandes (38) sont latéralement déplaçables de la moitié de la distance de trame (a/2) par rapport aux rangées de chevilles (22).

11. Dispositif suivant au moins les revendications 4 et 10, caractérisé en ce que les profilés (30) sont disposés à la même distance de trame (a) que les rangées de chevilles (22).

12. Dispositif suivant au moins une des revendications 4 à 11, caractérisé en ce que les profilés (30) peuvent être alignés à fermeture géométrique transversalement aux rangées de chevilles (22) de façon que la partie supérieure des profilés (30) forme la surface extérieure (34) perforée par les ouvertures des puits.

13. Dispositif suivant au moins une des revendications 4 à 12, caractérisé en ce que chaque profilé (30), pour recevoir la bande (38) affectée et/ou des chevilles (22), présente des surfaces de guidage (50), des fentes etc. ou forme des demi-coques.

14. Dispositif suivant au moins une des revendications 1 à 13, caractérisé en ce que le dispositif de composition (16) peut être déplacé par moteur ou manuellement pas à pas de la distance de trame (a), en particulier latéralement ou dans le sens longitudinal des profilés (30).

15. Dispositif suivant au moins une des revendications 1 à 14, caractérisé en ce qu'il est prévu au moins un dispositif d'indication (52) pour la position du dispositif de composition (16), en particulier de façon que, à chaque pas du mouvement du dispositif de composition un affichage tactile (54) est actionné.

16. Dispositif suivant au moins une des revendications 1 à 15, caractérisé en ce que le dispositif de composition (16) présente un nombre de leviers (56) avec des pointes (58) qui peuvent être posées contre le bout inférieur des chevilles (22).

17. Dispositif suivant au moins une des revendications 4 à 16, caractérisé en ce que le dispositif de composition (16) présente au moins un déclencheur de course translatable en sens longitudinal et transversal par rapport aux profilés (30), de préférence un électro-aimant à commande selon une matrice de coordonnées.

18. Dispositif suivant au moins une des revendications 1 à 16, caractérisé en ce que le dispositif de composition (16) présente un groupe de déclencheurs de course (60) disposés en déport, en particulier d'électro-aimants, cylindres pneumatiques etc., qui agissent soit directement soit par des éléments intermédiaires sur les chevilles (22).

19. Dispositif suivant la revendication 16 et la revendication 17 ou 18, caractérisé en ce que chaque déclencheur de course (60) s'attaque sur un levier (56) et en ce que les pointes de ceux-ci (58), lors de l'actionnement des déclencheurs de course, s'alignent sur une ligne transversale par rapport à la direction des rangées de chevilles (22).

20. Dispositif suivant la revendication 16 et la revendication 18 ou 19, caractérisé en ce que les leviers (56) sont alternativement logés à des axes (62), qui sont opposés les uns aux autres à l'extérieur du groupe des déclencheurs de course.

21. Dispositif suivant au moins une des revendications 16 à 20, caractérisé en ce que chaque levier (56) est chargé par un ressort (64) de façon à s'appuyer contre l'organe de réglage (66) du déclencheur de course (60) affecté.

22. Dispositif suivant au moins une des revendications 1 à 21, caractérisé en ce que le dispositif porte-caractères (20) est constitué en particulier par trois plaques perforées identiques, disposées parallèlement à des distances fixes, guidant les chevilles (22) perpendiculairement par rapport à leur plan.

23. Dispositif suivant au moins une des revendications 1 à 22, caractérisé en ce que au moins deux dispositifs porte-caractères (20) disposés l'un sur l'autre peuvent être positionnés simultanément, la longueur des chevilles (22) étant dimensionnée de façon que les chevilles inférieures s'appuyent contre les chevilles supérieures.

24. Dispositif suivant au moins une des revendications 1 à 23, caractérisé en ce que le resp. chaque dispositif porte-caractères (20) est réalisé à l'arrière sous forme de tablette à écrire, susceptible de recevoir une inscription.

Fig. 1

Fig. 2

Fig.3a  Fig.3b  Fig.3c

Fig.4

Fig.9

**Fig.5**

α

38

40

44

76

46

(30)

**Fig.8**

38

40

22

34

24

38

22

40

42

L

76

**Fig.6**

**Fig.7**

## Fig.10

## Fig.11